# FASCICULE DE BREVET EUROPEEN

(11) **EP 3 287 402 B1**
(45) Date de publication et mention de la délivrance du brevet: **01.01.2020**
(21) Numéro de dépôt: 17187124.7
(22) Date de dépôt: 21.08.2017
(51) Int. Cl.: B65H 63/00, B65H 49/32, H02G 11/02, B65H 61/00, G01B 7/02

(54) **TOURET DE CABLE DE TRANSPORT D'ELECTRICITE CONNECTE**
TROMMEL FÜR VERBUNDENES STROMTRANSPORTKABEL
CONNECTED ELECTRICITY TRANSPORT CABLE REEL

(30) Priorité: 26.08.2016 FR 1657954
(43) Date de publication de la demande: 28.02.2018
(73) Titulaire: Nexans, 92400 Courbevoie (FR)
(72) Inventeur: FOURRE, Bernard, 71400 CURGY (FR); PERISSE, Emmanuel, 71400 ANTULLY (FR); GAVACHE, Emmanuel, 92160 ANTONY (FR)
(74) Mandataire: Feray, Valérie

(56) Documents cités:
- EP-A1- 2 669 902
- DE-U1-202016 102 194
- GB-A- 2 530 534

## Description

L'invention concerne un touret de câble de transport d'électricité connecté.

Compte-tenu du prix du cuivre, le problème de vol de câble électrique est important de nos jours.

Aux Etats Unis, comme décrit dans un article publié le 25 janvier 2012 intitulé « GPS trackers help catch copper thieves », sur le site Internet « Homeland Security News Wire », accessible via le lien http://www.homelandsecuritynewswire.com/dr20120125-gps-trackers-help-catch-copper-thieves, il est connu d'installer des dispositifs de traçage GPS (acronyme de «Global Positioning System ») sur des tourets, afin de lutter contre ce problème grandissant. Dès qu'un touret de câble est déplacé de façon non autorisée, les forces de l'ordre peuvent le localiser et intercepter le voleur.

Cependant, une telle méthode ne permet de surveiller que le déplacement d'un touret complet et n'assure aucune protection contre le vol d'une longueur de câble déroulée d'un tel touret.

Le document DE 20 2016 102194 U1 divulgue une combinaison d' un touret de câble de transport d'électricité et d'un support de touret conforme au préambule de la revendication 1.

L'invention résout ce problème et propose une combinaison d' un touret de câble de transport d'électricité et d'un support de touret conforme à la revendication 1.

Outre la détection d'une effraction, à savoir une coupe non autorisée d'une longueur de câble sur le touret, l'invention permet d'assurer une autre fonction importante, la communication et la surveillance du stock de câble sur un ensemble de tourets.

De préférence, la carte électronique comprend un échomètre assurant la détection de la longueur de câble enroulé sur le touret.

En variante, ladite carte électronique comprend un agencement de mesure de résistance électrique assurant la détection de la longueur de câble enroulé sur le touret.

Avantageusement, ladite carte électronique comprend un accéléromètre assurant la détection du déplacement du touret.

Avantageusement, ladite carte électronique comprend un agencement de surveillance de l'état de ladite batterie.

L'invention concerne également un tel touret, associé et supporté par un support de touret, caractérisé en ce que ledit support intègre le dit agencement de connexion électrique.

Ledit support intègre ladite carte électronique dans un logement inviolable.

Ces éléments peuvent également être intégrés directement dans les parties constitutives du touret, en particulier ses flasques.

Ladite application distante est de préférence une application connectée à un réseau de téléphonie mobile, en particulier GSM (acronyme de « Global System for Mobile Communications »).

L'invention concerne enfin un procédé de surveillance d'une telle combinaison, caractérisé en ce que ladite application GSM est mise en fonction « verrouillage », lorsque ladite connexion électrique est effectuée, cette fonction pouvant être déverrouillée en cas d'utilisation par une personne autorisée.

Selon un mode de réalisation préféré, la valeur de la longueur du câble enroulé sur le touret est émise selon une certaine fréquence à ladite application grâce au dit échomètre.

De préférence, une alarme de coupe non autorisée du câble est émise à ladite application par comparaison avec au moins la dernière valeur de longueur émise.

Avantageusement, une alarme de vol du touret complet est émise en cas de détection d'un déplacement du touret grâce au dit accéléromètre.

L'invention est décrite ci-après plus en détail à l'aide des figures illustrant un mode de réalisation préféré de l'invention.
Les figures 1A et 1B sont des vues de côté et de face d'un touret associé et supporté par un support de touret, conforme à l'invention.
Les figures 2A et 2B sont des vues en perspective de détail.
La figure 3 est un tableau illustrant le procédé de surveillance d'un tel touret conformément à l'invention.
Les figures 4A et 4B est des vues d'écran d'un appareil mobile pourvu de l'application conforme à l'invention.
La figure 5 est un algorithme illustrant le procédé de surveillance d'un tel touret conformément à l'invention

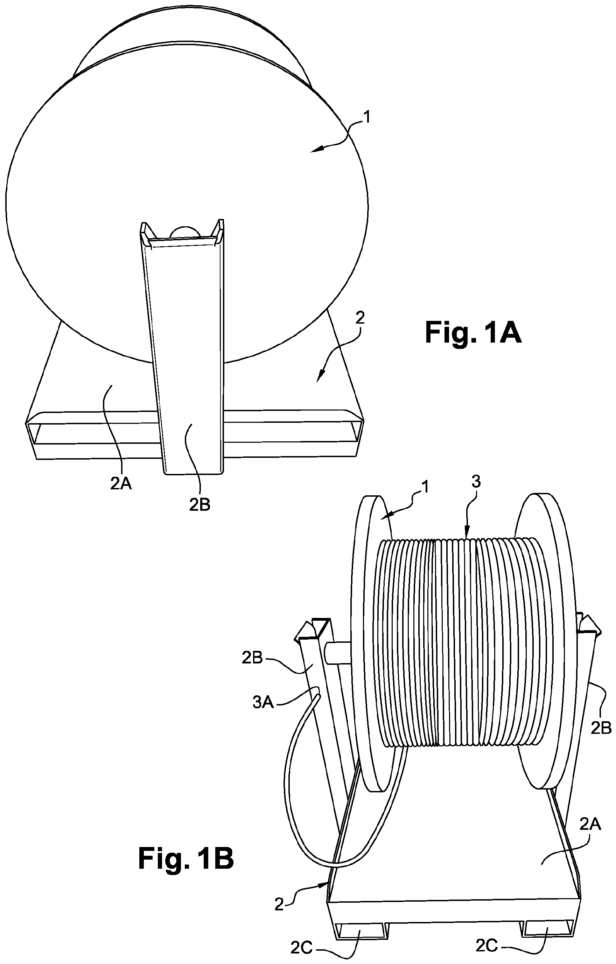

Comme représenté sur les figures 1A et 1B, un touret 1 est associé et supporté par un support de touret 2. Un câble de transport électrique 3 est stocké et enroulé sur ce touret 1.

Le support 2 est essentiellement constitué d'une base 2A destinée à être posée sur le sol ou équivalent et de deux montants 2B connecté par un arbre de rotation traversant le touret 2. La base 2A comporte deux longerons tubulaires 2C permettant le passage d'une fourche d'un chariot élévateur pour le chargement et le déchargement du support 2.

Ce touret 1 de câble de transport d'électricité est associé à un agencement de connexion électrique d'au moins un conducteur dénudé de l'extrémité libre du câble, cet agencement de connexion électrique étant connecté à une carte électronique reliée à une application GSM mise en fonction et alimentée par une batterie.

Le support intègre cet agencement de connexion électrique dans un de ses montants 2B.

Le support intègre également la carte électronique dans un logement inviolable et étanche disposé dans la base 2A ou dans un des montants 2B du support.

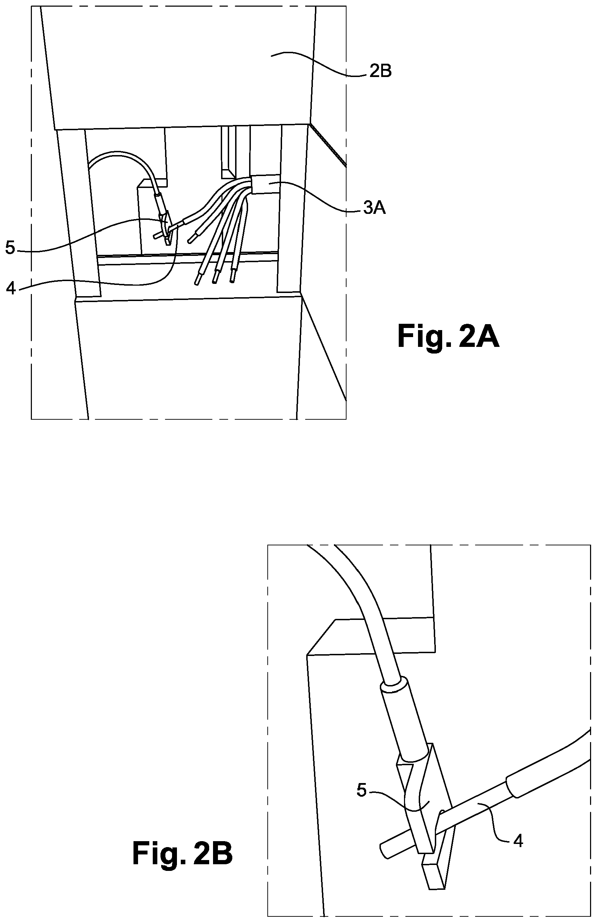

Les figures 2A et 2B représentent l'agencement de connexion électrique d'au moins un conducteur dénudé de l'extrémité libre 3A du câble, logé dans un des montants 2B du support.

L'extrémité libre 3A du câble est donc dénudée et un conducteur 4 est inséré dans une pince 5 conductrice, elle-même connectée à la carte électronique. En variante, tous les conducteurs du câble peuvent être insérés dans une telle pince.

La carte électronique comprend un accéléromètre assurant la détection du déplacement du touret 1 par l'application GSM, ainsi qu'un échomètre assurant la détection de la valeur de longueur de câble enroulé sur le touret 1 par ladite application GSM.

A la place d'un échomètre, la carte électronique peut comprendre un agencement de mesure de résistance électrique assurant la détection de la longueur de câble enroulé sur le touret.

La détection de la longueur de câble enroulé sur le touret est alors effectuée par mesure de la résistance du câble enroulé. L'extrémité intérieure du câble enroulé est connectée en permanence à la carte électronique et l'opérateur, qui déroule le câble et le coupe, vient ensuite connecter l'extrémité libre du câble audit agencement de connexion électrique, afin que la mesure de résistance puisse s'effectuer.

La carte électronique comprend également un agencement de surveillance de l'état de sa batterie, à savoir son niveau de charge, sa mise en mode d'économie à un certain seuil de son niveau de charge et sa géolocalisation, assurant la surveillance de cette dernière par l'application GSM. De même un dysfonctionnement des fonctions électroniques déclenche une alarme.

Par l'application GPS, la nature du câble est également paramétrée sur la carte électronique. En effet, la surveillance peut s'effectuer que les conducteurs du câble soit en cuivre, soit en un autre métal, par exemple en aluminium ou en alliage.

Lorsque le touret 1 est pourvu d'une puce de type RFID, acronyme de « radio frequency identification », son information est également communiquée à la carte électronique, afin de pouvoir limiter l'utilisation de l'invention à certains tourets.

La géolocalisation du touret 1 est également transmise à la carte électronique.

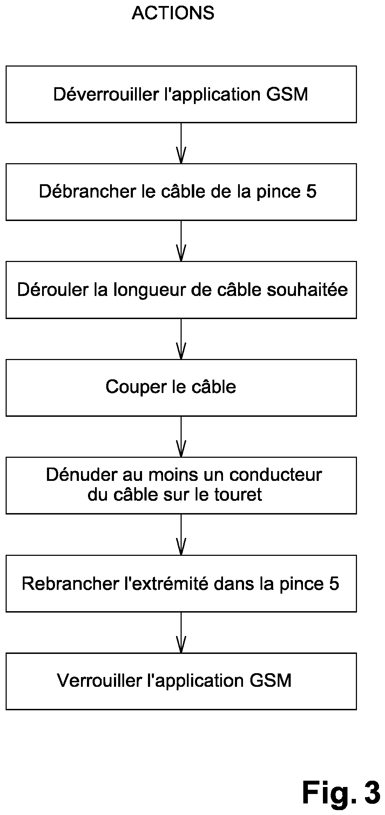

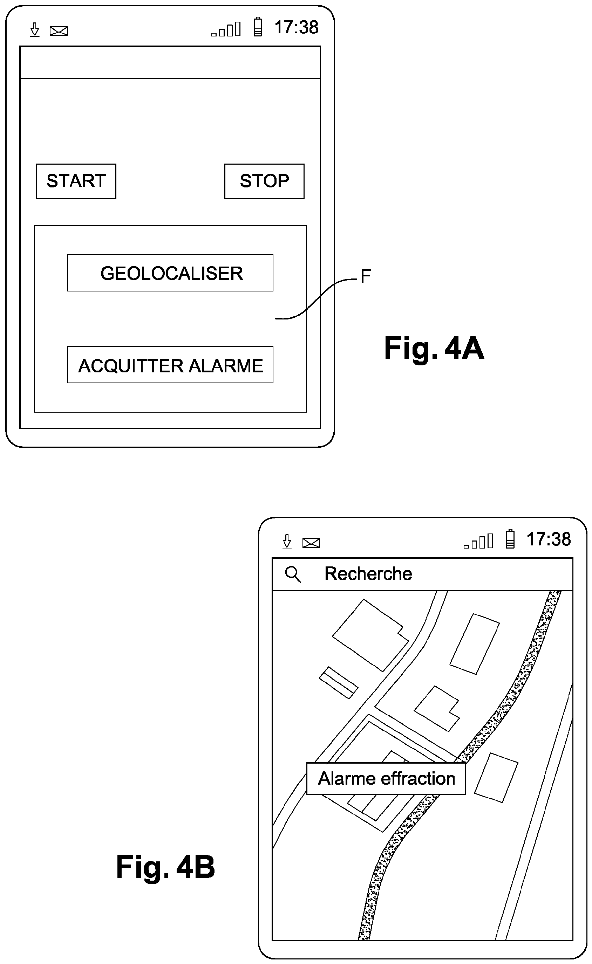

Le procédé de surveillance d'un tel touret consiste à mettre en fonction « verrouillage » l'application GSM, au moyen d'un appareil mobile tel qu'un téléphone représenté sur la figure 4A, lorsque la connexion électrique est effectuée dans la pince 5, une zone de l'écran F de l'appareil mobile étant alors dans une couleur spécifique par exemple de couleur verte. Cette fonction peut être déverrouillée en cas d'utilisation par une personne autorisée comme illustré sur le tableau de la figure 3, la zone de l'écran F de l'appareil mobile étant alors dans une autre couleur spécifique par exemple de couleur orange.

Cette personne autorisée, en général un technicien de chantier, déverrouille tout d'abord l'application GSM, par activation de la touche « STOP », puis débranche l'extrémité 3A du câble de la pince 5, pour dérouler la longueur de câble souhaitée. Il coupe alors cette longueur de câble pour son utilisation et dénude au moins un conducteur à la nouvelle extrémité libre du câble pour le brancher dans la pince 5. La fonction « verrouillage » de l'application GSM est alors remise en fonction, par activation de la touche « START », afin d'effectuer la surveillance du touret 1.

Dans cet état, il est possible d'actionner un bouton « GEOLOCALISER » assurant la géolocalisation du touret.

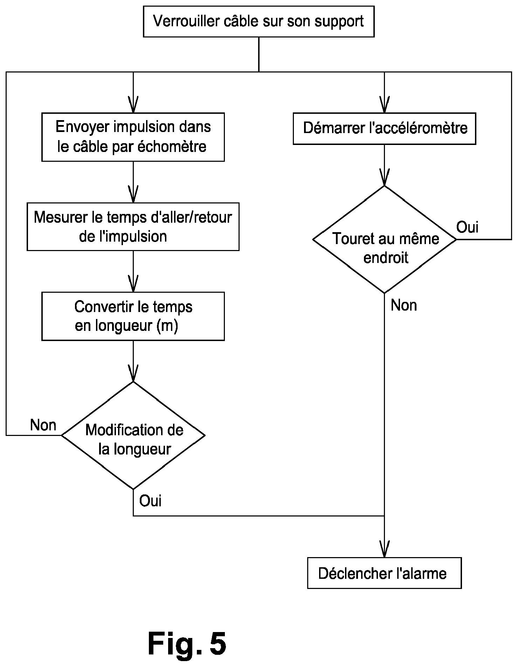

L'algorithme de la figure 5 illustre les étapes de surveillance.

La valeur de longueur du câble enroulé sur le touret 1 est émise selon une certaine fréquence à l'application GSM grâce à l'échomètre. Et une alarme de coupe non autorisée du câble peut être émise à l'application GSM par comparaison avec au moins la dernière valeur de longueur émise.

Plus précisément, dans cet état de « verrouillage », l'échomètre est mis en action et envoie une impulsion dans le câble, le temps d'aller-retour de cette impulsion dans le câble étant mesuré et converti en valeur de longueur de câble enroulé sur le touret. Si la longueur est identique à celle mesurée précédemment, l'échomètre est remis en fonction pour une mesure suivante. Dans le cas contraire, s'il est détecté une modification de longueur de câble sur le touret, une alarme est déclenchée.

En parallèle, une alarme de vol du touret complet avec son support peut émise en cas de détection d'un déplacement grâce à l'accéléromètre. Lors du déclenchement de cette alarme, le positionnement GPS du touret est communiqué en quelques secondes comme illustré sur la figure 4B.

Tous ces signaux d'alarme sont transmis par la carte électronique à un ou plusieurs téléphones mobiles ou autres appareils mobiles pourvus de l'application, avec possibilité de les communiquer par SMS (acronyme de « Short Message Service ») sur une application destinée à une société de gardiennage par exemple.

L'appareil mobile comme représenté sur la figure 4A comporte également un bouton « ACQUITTER ALARME » qui, sans arrêter la surveillance, stoppe l'envoi de ces SMS d'indication d'effraction pendant un certain temps, par exemple un quart d'heure, afin de ne pas transmettre un trop grand nombre de SMS identiques et inutiles.

Outre la détection d'une effraction, l'invention présente une autre fonction importante, la communication du stock de câble sur tourets. En effet, comme il a été vu plus haut, la valeur de longueur de câble sur le touret 1 est transmise à l'application GSM et il est donc possible de connaître la quantité de câble restant sur un ensemble de tourets, sur une plateforme informatique, avec la date du dernier prélèvement de câble et l'emplacement satellite. Pour permettre ce contrôle du stock de câble, chaque touret possède un numéro d'identification électronique.

## Revendications

1. Combinaison d'un touret de câble de transport d'électricité et d'un support de touret, ledit touret étant associé à un agencement de surveillance à distance de la longueur de câble (3) enroulé sur le touret (1), ledit touret (1) étant associé à un agencement de connexion électrique d'au moins un conducteur (4) dénudé de l'extrémité libre (3A) du câble, cet agencement de connexion électrique étant connecté à une carte électronique alimentée par une batterie et reliée à une application distante mise en fonction, ledit touret (1) étant associé et supporté par ledit support de touret (2), **caractérisé en ce que** ledit support (2) intègre ladite carte électronique dans un logement inviolable.

2. Combinaison selon la revendication 1, **caractérisé en ce que** ladite carte électronique comprend un échomètre assurant la détection de la longueur de câble enroulé sur le touret (1).

3. Combinaison selon la revendication 1, **caractérisé en ce que** ladite carte électronique comprend un agencement de mesure de résistance électrique assurant la détection de la longueur de câble enroulé sur le touret (1).

4. Combinaison selon l'une des revendications 1 à 3, **caractérisé en ce que** ladite carte électronique comprend un accéléromètre assurant la détection du déplacement du touret (1).

5. Combinaison selon l'une des revendications 1 à 4, **caractérisé en ce que** ladite carte électronique comprend un agencement de surveillance de l'état de ladite batterie.

6. Combinaison selon l'une des revendications 1 à 5, **caractérisé en ce que** ledit support (2) intègre le dit agencement de connexion électrique.

7. Combinaison selon l'une des revendications 1 à 6, **caractérisé en ce que** ladite application distante est une application connectée à un réseau de téléphonie mobile.

8. Procédé de surveillance d'une combinaison selon l'une des revendications 1 à 7, **caractérisé en ce que** ladite application est mise en fonction « verrouillage », lorsque ladite connexion électrique est effectuée, cette fonction pouvant être déverrouillée en cas d'utilisation par une personne autorisée.

9. Procédé de surveillance selon la revendication 8, d'une combinaison selon la revendication 2 ou 3, **caractérisé en ce que** la valeur de la longueur du câble (3) enroulé sur le touret (1) est émise selon une certaine fréquence à ladite application grâce au dit échomètre ou au dit agencement de mesure de la résistance électrique.

10. Procédé de surveillance selon la revendication précédente, caractérisé en qu'une alarme de coupe non autorisée du câble (3) est émise à ladite application par comparaison avec au moins la dernière valeur de longueur émise.

11. Procédé de surveillance selon l'une des revendications 8 à 10, d'une combinaison selon la revendication 4, **caractérisé en ce qu'**une alarme de vol du touret (1) complet est émise en cas de détection d'un déplacement du touret grâce au dit accéléromètre.

## Patentansprüche

1. Einrichtung, bestehend aus einer Trommel für ein Stromübertragungskabel und einer Trommelhalterung, wobei die Trommel mit einer Anordnung (3) zur Fernüberwachung der Länge des auf der Trommel (1) gewickelten Kabels verbunden ist, wobei die Trommel (1) mit einer Stromanschlussanordnung mindestens eines blanken Leiters (4) am freien Ende (3A) des Kabels verbunden ist, wobei die Stromanschlussanordnung mit einer elektronischen Karte verbunden ist, die durch eine Batterie mit Strom versorgt wird und mit einer Fernbetriebnahmeanwendung verbunden ist, wobei die Trommel (1) mit der Trommelhalterung (2) verbunden ist und davon getragen wird, **dadurch gekennzeichnet, dass** die Halterung (2) die elektronische Karte in einem verschlusssicheren Gehäuse umfasst.

2. Einrichtung nach Anspruch 1, **dadurch gekennzeichnet, dass** die elektronische Karte einen Echometer umfasst, der die Erkennung der Länge des auf der Trommel (1) gewickelten Kabels gewährleistet.

3. Einrichtung nach Anspruch 1, **dadurch gekennzeichnet, dass** die elektronische Karte eine Anordnung zur Messung des elektrischen Widerstands umfasst, die die Erkennung der Länge des auf der Trommel (1) gewickelten Kabels gewährleistet.

4. Einrichtung nach einem der Ansprüche 1 - 3, **dadurch gekennzeichnet, dass** die elektronsiche Karte einen Beschleunigungsmesser umfasst, der die Erkennung von Bewegungen der Trommel (1) gewährleistet.

5. Einrichtung nach einem der Ansprüche 1 - 4, **dadurch gekennzeichnet, dass** die elektronische Karte eine Anordnung zur Überwachung des Zustands der Batterie umfasst.

6. Einrichtung nach einem der Ansprüche 1 - 5, **dadurch gekennzeichnet, dass** die Stromanschlussanordnung die Halterung (2) integriert ist.

7. Einrichtung nach einem der Ansprüche 1 - 6, **dadurch gekennzeichnet, dass** die Fernanwendung eine Anwendung ist,die mit einem Mobilfunknetz verbunden ist.

8. Verfahren zur Überwachung einer Einrichtung nach einem der Ansprüche 1 - 7, **dadurch gekennzeichnet, dass** die Anwendung in den Verriegelungsmodus übergeht, wenn der Stromanschluss hergestellt wird und bei Benutzung durch eine befugte Person entriegelt werden kann.

9. Verfahren nach Anspruch 8 zur Überwachung einer Einrichtung nach Anspruch 2 oder 3, **dadurch gekennzeichnet, dass** der Längewert des auf der Trommel (1) gewickelten Kabels (3) durch den Echometer oder die Widerstandsmessanordnung mit einer bestimmten Frequenz an die Anwendung gesendet wird.

10. Verfahren nach dem vorigen Anspruch, **dadurch gekennzeichnet, dass** einen Alarm über das unbefugte Schneiden des Kabels (3) durch einen Vergleich mit mindestens dem zuletzt gesendeten Längewert an die Anwendung gesendet wird.

11. Verfahren nach einem der Ansprüche 8 - 10 zur Überwachung einer Einrichtung nach Anspruch 4, **dadurch gekennzeichnet, dass** ein Alarm über den Diebstahl der ganzen Trommel (1) gesendet wird, wenn durch den Beschleunigungsmesser eine Bewegung der Trommel erkannt wird.

## Claims

1. A combination of an electricity transport cable reel and a reel holder, the reel being associated with an arrangement for remote monitoring of the length of cable (3) wound on the reel (1), said reel (1) being associated with an arrangement for electrical connection of at least one stripped conductor (4) of the free end (3A) of the cable, this electrical connection arrangement being connected to an electronic board powered by a battery and linked to a remote actuating application, said reel (1) being associated with and supported by said reel holder (2), **characterized in that** said holder (2) incorporates said electronic board into a tamperproof housing.

2. The combination according to claim 1, **characterized in that** said electronic board comprises a tone tracer ensuring the detection of the length of cable wound on the reel (1).

3. The combination according to claim 1, **characterized in that** said electronic board comprises an electrical resistance measuring arrangement ensuring the detection of the length of cable wound on the reel (1).

4. The combination according to one of claims 1 to 3, **characterized in that** said electronic board comprises an accelerometer ensuring the detection of the movement of the reel (1).

5. The combination according to one of claims 1 to 4, **characterized in that** said electronic board comprises an arrangement for monitoring the status of said battery.

6. The combination according to one of claims 1 to 5, **characterized in that** said holder (2) incorporates said electrical connection arrangement.

7. The combination according to one of claims 1 to 6, **characterized in that** said remote application is an application connected to a mobile telephony network.

8. A method for monitoring a combination according to one of claims 1 to 7, **characterized in that** said application is actuated for "locking", when said electrical connection is done, this function being able to be unlocked in case of use by an authorized person.

9. The monitoring method according to claim 8, for a combination according to claim 2 or 3, **characterized in that** the value of the length of the cable (3) wound on the reel (1) is sent at a certain frequency to said application using said tone tracer or said arrangement for measuring the electrical resistance.

10. The monitoring method according to the preceding claim, **characterized in that** an alarm for unauthorized cutting of the cable (3) is sent to said application by comparison with at least the last sent length value.

11. The monitoring method according to one of claims 8 to 10, for a combination according to claim 4, **characterized in that** an alarm for theft of the entire reel (1) is sent in case of detection of a movement of the reel using said accelerometer.
